# EUROPEAN PATENT SPECIFICATION

(11) **EP 2 687 413 B1**
(45) Date of publication and mention of the grant of the patent: **23.03.2016**
(21) Application number: 12006843.2
(22) Date of filing: 02.10.2012
(51) Int. Cl.: B60R 21/215, B60R 13/00

(54) **Cover for a gas bag module, a bag module with said cover, steering wheel and method of manufacturing said cover**
Abdeckung für ein Gasbeutelmodul, Gasbeutelmodul mit der Abdeckung, Lenkrad und Verfahren zur Herstellung der Abdeckung
Couvercle pour module de sac à gaz, module de sac avec ledit couvercle, volant et procédé de fabrication dudit couvercle

(30) Priority: 17.07.2012 EP 12005254
(43) Date of publication of application: 22.01.2014
(73) Proprietor: Dalphi Metal España, S.A., 28042 Madrid (ES)
(72) Inventor: Jonietz, Andreas, 36204 Vigo (ES); Garcia Rodriguez, José Luis, 36212 Vigo (ES); Pajòn Fustes, Enrique, 36208 Vigo (ES)
(74) Representative: Mehnert, Bernhard

(56) References cited:
- EP-A1- 0 695 671
- EP-A1- 1 642 784
- EP-A1- 1 657 125
- EP-A2- 0 756 972
- EP-A2- 1 839 952
- DE-A1-102010 049 987
- US-A- 6 003 895
- US-A- 6 053 526
- US-A1- 2012 076 958
- US-B1- 6 209 905

## Description

The invention relates to a cover for a gas bag module including a decorative element or a surface element having a front face and a rear face and a mounting element arranged on the rear face of the decorative or surface element. The invention further relates to a gas bag module and a steering wheel having said cover and, additionally, to a method of manufacturing a cover for a gas bag module.

Typically, cars include a passenger restraint system which comprise gas bag modules, in particular airbag modules. The gas bag modules are often integrated in a steering wheel wherein a cover or cap is provided which encloses the gas bag module. The cover includes a decorative element having a front face which is visible to the vehicle occupant. Further, the cover usually includes a mounting element which is adapted to connect or secure the cover to a housing of the gas bag module. The decorative element of conventional gas bag covers is connected with the mounting element by rivets. Thus, it is necessary to provide the mounting element with a plurality of openings in which the rivets of the decorative element engage. Owing to the plurality of openings or apertures in the mounting element, the strength of the mounting element is reduced. Moreover, the creative leeway in forming the decorative element is limited since the decorative element must be designed to allow a rivet connection.

Alternatively, it is known to connect the decorative element to the mounting element by crimping and welding. In this case, the decorative element includes extensions which extend from the rear face of the decorative element and encompass the mounting element. The mounting element is then welded to the extensions of the decorative element. Such gas bag covers are difficult and complex to manufacture. Due to the extension which must be provided on the decorative element, the creative leeway is also limited.

US 6,003,895 discloses an airbag cover for a steering wheel having a decorative element, in particular an ornament, mounted on the front face of the cover by a molding method. However, in order to ensure that an airbag is able to escape from the airbag module through the cover, the cover must include tearlines. In the known cover, the tearlines are provided in an H-shaped manner, thus providing a double-wing door which opens when the airbag is inflated. The decorative element is relatively small in order to not interfere with the tearlines which limit the scope of the design for both the decorative element and the front face or surface element of the cover.

US 6,209,905 B1 discloses a steering wheel cover having an emblem attached to the cover by injection molding. The covers include tear lines that allow them to open in case of a gas bag module being activated and the gas bag being thus inflated and expanded. However, these covers can be used only in combination with a specific gas bag module and, due to the tear lines, the creative leeway for the emblem is limited.

It is an object of the present invention to provide a cover for a gas bag module which is easy and cost efficient to manufacture and which increases the scope for design of a decorative element or surface element. Further, it is an object of the present invention to provide a gas bag module and a steering wheel including such a cover and to provide a method of manufacturing such a cover.

The present invention is based on the idea to provide a cover for a gas bag module, the cover comprising a decorative element or surface element, in particular an emblem, having a front face and a rear face. The front face may be visible to a vehicle occupant when the cover is connected to the gas bag module. The cover further comprises a mounting element arranged on the rear face of the decorative element or surface element. The mounting element may be adapted for mounting the cover to a housing of the gas bag module. According to the invention, the mounting element is formed by over-molding the decorative element or surface element such that the mounting element is bonded directly to the decorative element or surface element, in particular by material engagement, The cover is free of tearlines.

The cover according to the present invention provides for simple manufacturing, low production costs and uniform strength. Owing to the reduced number of independent parts, the cover provides for a reduced weight. Moreover, the cover according to the present invention can have different designs related both to different colours and a three-dimensional structure.

The main idea of the present invention is to over-mold an element which is visible to the driver of a vehicle in order to enhance the strength of the element. Moreover, the molded part serves as a mounting element for connecting the cover to a housing of the gas bag module. The element which is over-molded may be a decorative element such as an emblem or an ornament, e.g. showing a logo of a vehicle manufacturer, or it may be a surface element, i.e. an outer layer, of the cover which is visible to the driver. The surface element may include an opening for receiving a cap which may be manufactured by over-molding a decorative element or it may be an ornament which is manufactured in the conventional way.

In the following, the reduced wording "decorative/surface element" means "decorative element or surface element". The reduced wording is intended only to improve the legibility of the present application.

According to a preferred embodiment of the present invention, the decorative/surface element and the mounting element comprise the same material in order to enhance the bonding connecting between the decorative/surface element and the mounting element. Alternatively, the decorative/surface element and the mounting element may comprise different materials. This allows for adaptability with respect to considering different customer needs such as to the design of the decorative/surface element. For example, the decorative element may include metal design parts, in particular a metallic coating such as a chromium coating, which enhance the physical appearance of the cover whereas the mounting element is formed from a plastic material which allows for easy over-molding the decorative element/surface element and provides a reduced weight.

Preferably, the decorative/surface element is formed of plastic film. This further allows for a plurality of options to design the decorative/surface element. The plastic film may, in particular, comprise a decorated, preferably printed, surface. This provides a very flexible design of the cover. The plastic film may be easily exchangeable such that the design of the cover can quickly and easily be adapted to design change needs. Generally, using a plastic film as the decorative element increases the scope of design options. For example, the plastic film allows for a transmitted light design, in particular a day/night design, of the decorative element.

The decorated surface of the plastic film may be arranged on the front face of the decorative/surface element. As such, the decorated surface is arranged facing the vehicle occupant. More preferably, the decorated surface is arranged on the rear face of the decorative/surface element. Thus, the decoration is protected by the outside plastic film and additionally enables a very high gloss which is often desired from a design perspective. However, these advantages may also be achieved in cases of arranging the decorated surface on the front face of the decorative/surface element if the decorated surface is coated with a transparent or translucent protective layer, e.g. transparent varnish or clear lacquer.

Preferably, the decorative/surface element, in particular the plastic film, comprises a three-dimensional structure. The mounting element may fill cavities of said three-dimensional structure on the rear face of the decorative/surface element. The three-dimensional structures are often desired for decorative elements such as emblems of automotive manufacturers of ornamental rings or the like. By filling the cavities of the three-dimensional structure on the rear face of the decorative/surface element, i.e. by back filling the decorative/surface element, the strength of the decorative/surface element is enhanced.

The cover according to the present invention may further comprise an opening for receiving a cap which allows for an inflating gas bag to escape from the gas bag module. In particular, the surface element may include the opening. The cap which closes the opening may be connected to the cover by a loose fit or may be attached to the cover so as to be removable when the gas bag is inflated. A tether may be provided which avoids that the cap moves freely away from the cover. Rather, the tether connects the cap and the cover/lower shell even if the cap is removed from the opening to allow the gas bag to inflate.

The cap may include or may consist of a decorative element which is over-molded with a mounting element. That is, the gas bag cover may consist of two parts which are manufactured the same way. A first part forms the cover itself which has a surface element over-molded with a mounting element. The first part is free of tearlines. Instead, the first part, i.e. the cover itself, includes an opening for receiving a cap which forms the second part of the gas bag cover. The cap is formed by a decorative element, e.g. an ornament, which is overmolded with a mounting element. The cap is loosely connected to the cover (first part) by means of its mounting element. The cap may be additionally connected to the cover/lower shell by a tether which has a length that allows the cap to unblock the opening completely for the gas bag to escape.

In a preferred embodiment of the present invention, the surface element may include at least one capacitive area which forms a touch sensitive button. Additionally or alternatively, the surface element, in particular the touch sensitive button, includes at least one horn and/or infotainment and/or multifunction push button. In other words, the front face of the surface element, i.e. the surface which is visible to the vehicle occupant, may serve as a control element, preferably controlling the horn function and/or an infotainment function and/or a control function for controlling the vehicle. For example, the surface element may include the functionality of a multifunction steering wheel, e.g. as such having buttons for controlling the autopilot, the volume of the vehicle's radio and similar functions.

According to a further aspect of the invention, a gas bag module, in particular driver side airbag module or passenger side airbag module, including a cover as described above is provided.

Another aspect of the present invention relates to a steering wheel for a motor vehicle including a cover or a gas bag module as described above.

The present invention also relates to a method of manufacturing a cover for a gas bag module wherein a decorative element, in particular an emblem, or a surface element is provided and subsequently over-molded to create a mounting element directly bonded to the decorative/surface element, in particular by material engagement, wherein means for mounting the mounting element to a housing of the gas bag module are formed during the step of over-molding the decorative/surface element. Preferably, the mounting element is formed on a rear face of the decorative/surface element. The rear face of the decorative/surface element may be averted from a front face of the decorative/surface element wherein the front face is visible to a vehicle occupant when the cover is integrated in a gas bag module for an occupant restraint system of a motor vehicle.

The method according to the present invention is characterised by a limited number of individual method steps, thus reducing the complexity of gas bag cover production and further increasing the quantity of covers manufactured within a specific timeframe.

In a preferred embodiment of the inventive method, the decorative/surface element is formed of a plastic film and the step of providing the decorative/surface element comprises printing a decor on the plastic film and/or preforming the plastic film into a three-dimensional shape.

Further, the step of providing a decorative/surface element may comprise the steps of inserting the decorative/surface element, in particular the plastic film, in a mold such that the front face of the decorative/surface element contacts an inner surface of the mold entirely and the rear face of the decorative/surface element is spaced apart from the inner surface of the mold so as to provide an injection space between the rear face of the decorative/surface element and the inner surface of the mold and injecting a plastic material into the injection space to create the mounting element.

The invention is described in further detail below with regard to the accompanying drawings in which
Fig. 1 shows a perspective view of a cover according to the present invention in a preferred embodiment;
Fig. 2 shows a section view of the cover according to Fig. 1;
Fig. 3 shows a perspective view of a gas bag module including the cover according to Fig. 1; and
Fig. 4 shows a cover according to the present invention in a further preferred embodiment, wherein the cover is formed by over-molding a surface element.

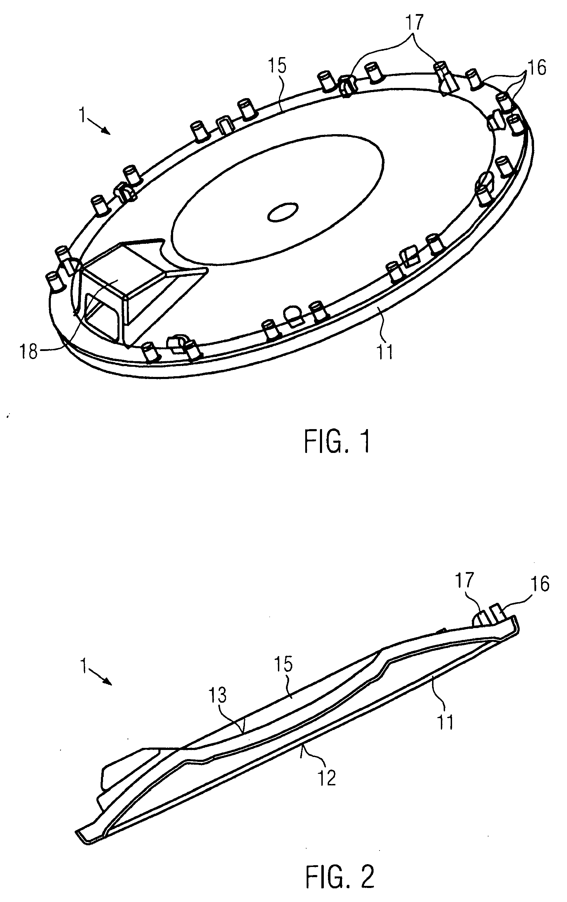

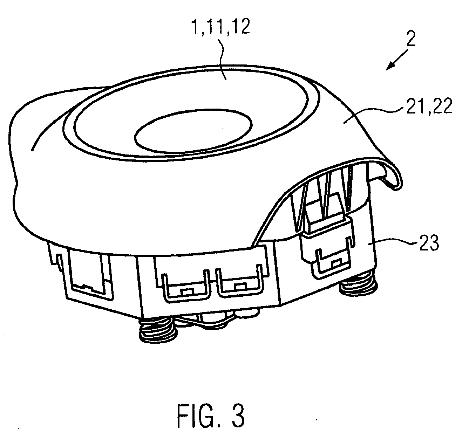

Figs. 1 and 2 show a cover for a gas bag module, also referred to as gas bag cover, according to a preferred embodiment of the invention. The gas bag cover 1 may be part of a vehicle occupant restraint system wherein the gas bag cover 1 covers a gas bag module 2 as shown in Fig. 3.

The gas bag module generally may include a gas generator and a gas bag. The cover 1 is adapted to be loosely connected to the gas bag module 2 in particular a housing 21 of the gas bag module 2. Thus, the gas bag cover 1 may be disconnected from the housing 21 when the gas bag is inflated.

Preferably, a cover according to Fig. 1 and 2 is used to cover a driver-side airbag module. Alternatively, the cover 1 may be designed and or adapted to cover a housing of a passenger-side airbag module.

The gas bag cover 1, generally includes a decorative element 11, in particular an emblem of an automotive manufacturer, and a mounting element 15 which is firmly bonded to the decorative element 11. The decorative element 11 has a front face 12 which faces a vehicle occupant when the cover 1 is mounted or integrated into a vehicle occupant restraint system. Further, the decorative element has a rear face which faces the gas bag module 2 in the mounted state. The mounting element 15 is bonded directly and firmly to the rear face 13 of the decorative element 11.

As shown in Fig. 1, the mounting element has a complex structure including positioning means 16 and fastening means 17. The positioning means 16 are formed by protuberances such as pins or bolts which are adapted to engage respective openings in the housing 21 of the gas bag module 2. The positioning means 16 extend from the mounting element 15 substantially perpendicular to the rear face 13 of the decorative element 11.

The fastening means 17 are preferably formed by snap-fits or engagement hooks which are adapted to engage to respective snap openings in the housing 21 of the gas bag module 2. Thus, the fastening means 17 allows for connecting the cover 1 to the gas bag module 2. The snap-fit connection between the cover 1 and the gas bag module 2 is adapted to allow the cover 1 to disengage from the gas bag module 2 when a gas bag (not shown) of the gas bag module 2 is inflated.

However, the mounting element 15 includes a tether receiving means 18 adapted to receive a tether (not shown) which may be firmly connected to the housing 21 of the gas bag module 2. The tether ensures that the cover 1 remains connected to the gas bag module 2 when the gas bag is inflated. That is, the cover 1 is not fully disconnected from the gas bag module 2 when the gas bag is inflated, but still tied to the gas bag module 2.

The mounting element 15 is manufactured by an injection molding process. In particular, the cover 1 is formed by a decorative element 11 which is over-molded or, respectively, back injection molded with a plastic material, the plastic material forming the mounting element 15. The step of injection molding the mounting element 15 also includes forming the positioning means 16, the fastening means 17 and the tether receiving means 18. That is, the mounting element 15, the positioning means 16, the fastening means 17 and the tether receiving means 18 are manufactured in one piece by back injection molding or over-molding the decorative element 11.

Fig. 3 shows a gas bag module 2 including the cover 1 of Figs. 1 and 2. The gas bag module generally comprises a housing 21 which is formed by an upper shell 22 and a lower shell 23. The upper shell 22 and the lower shell 23 are connected by a snap-fit connection. The gas bag cover 1 is received in a recess of the upper shell 22. That is, the upper shell 22 includes snap openings to receive the fastening means 17 of the cover's mounting element 15. The gas bag module 2 according to Fig. 3 is preferably adapted to be arranged on the driver side of a motor vehicle. In particular, the gas bag module 2 of Fig. 3 may be integrated in a steering wheel of a motor vehicle.

As discussed, manufacturing of the cover according to the present invention is performed by providing the decorative element 11 and subsequently over-molding or back injection molding the decorative element 11 in order to form the mounting element 15. In a more preferred embodiment, the decorative element 11 is formed of a plastic film, in particular a decorated film. The decorated film forms the optical surface of finished cover 1 or gas bag module 2. In particular, the plastic film may comprise a decorated surface and the decorated surface may be arranged on the front face 12 or the rear face 13 of the decorative element 11. If arranged on the rear face 13, it is preferred that the plastic film substantially includes a transparent material in order to allow the decorated surface to be visible from the front face 12 of the decorative element 11. The decorated surface may include a printing. That is, the plastic film may be printed prior to formation wherein the printing may include black/white-printing, greyscale printing or, more preferably, coloured printing. The printed surface of the plastic film corresponds to the decorated surface. Generally, the use of printed plastic film increases the scope of design possibilities for the decorative element 11. For example, the decorated surface may be monochrome, designed with special colours, in particular metallic effects, and/or may additionally include integrated symbols. Moreover, the decorated plastic film may be formed into a three-dimensional shape or structure which is often desired for decorative elements 11 such as emblems of automotive manufacturers. Prior or after forming the three-dimensional shape of the decorated film, the decorated film may be coated with a protective coating and/or a design coating, e.g. a chromium layer.

The decorated plastic film may be three-dimensionally shaped by mechanical forming, hydro forming, high pressure forming or other suitable cold plastic deformation methods. Alternatively, the decorated film may be shaped by heat forming, for example thermo forming with a stamp, high pressure thermo forming or thermo forming using a vacuum.

After the plastic film or, generally, the decorative element 11 has been three-dimensionally shaped, the decorative element 11 should be trimmed at the edges and recesses in order to remove injection mold remnants thus avoiding unclean edges of the injection molded part, i.e. the mounting element 15.

Subsequently, the trimmed plastic film or decorative element 11 is inserted into an injection mold wherein the front face of the decorative element 11 entirely contacts the inner surface of the injection mold. The rear face 13 of the decorative element 11, however, is spaced apart from the inner surface of the injection mold. Thus, an injection space is provided between the injection mold and the decorative element 11.

The injection space comprises the negative form of the mounting element 15 to be formed. Forming the mounting element 15 includes injecting a heated plastic material into the injection space, thus taking the form of the injection space. Thereby, the injected plastic material firmly bonds to the rear face 13 of the decorative element. Once the injected plastic material is cooled down, the finished cover 1 is ejected from the mold.

The method of manufacturing the cover 1 as described above opens up a variety of possibilities for the design of gas bag module covers.

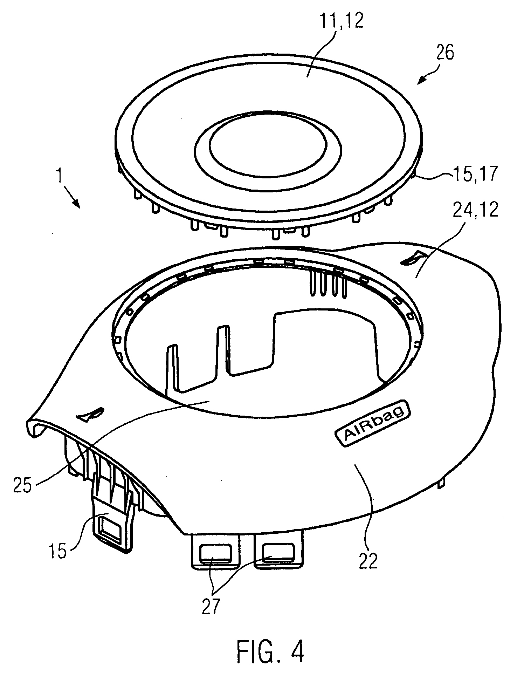

The abovementioned method which has been described in connection with manufacturing a cover 1 which completely forms a decorative element may also be used for manufacturing a cover 1 forming the upper shell of a gas bag module which is free of any tearlines. Fig. 4 shows a cover 1 or upper shell 22 of a gas module housing 2. Instead of any tearlines the cover 1 or upper shell 22 includes an opening 25 which allows for the gas bag to escape from the gas bag module during inflation. The opening is covered by a cap 26. As such, the compressed gas bag is completely enclosed in the gas bag module which consists of the lower shell 23, the upper shell 22 consisting of the tearline-free cover 1 and the cap 26. The cap 26 forms an emblem or ornament which may be manufactured in the same way as the cover 1. That is, the cap 26 includes a decorative element 11 having a front face 12 facing a vehicle occupant when mounted to a steering wheel. The decorative element 11 may be over-molded with a plastic material, the plastic material thus forming the mounting element 15. The mounting element 15 includes fastening means 12 which extend from the rear face 13 of the decorative element 11. By means of the fastening means 17, the cap 26 may be connected to the upper shell 22 or cover 1. Additionally, a tether may be provided which is connected to the cap 26 and the upper shell 22, thus avoiding the cap 26 to be completely disengaged from the upper shell 22 when a gas bag expands through the opening 25.

The upper shell 22 or, respectively, the cover 1 also includes an outer layer of material which faces a vehicle occupant when mounted to a steering wheel or gas bag module housing 21. The outer layer of material is formed by a surface element 24 which is - on its rear face averting the vehicle occupant - over-molded by a plastic material. The plastic material forms a mounting element 15 which is adapted to connect the cover 1 or upper shell 22 to a housing 21, in particular a lower shell 23. The mounting element 15 of the cover 1 includes snap-fit connections 27 for fastening the cover 1 or upper shell 22 to the lower shell 23.

The surface element 24 may be formed similarly to that of the decorative element 11 of the cap 26. That is, the surface element 24 may have a decorated, in particular printed, surface, wherein the decorated or printed surface forms the front face of the surface element 24.

The printed surface may include symbols which inform the vehicle driver about functions which are included into the cover 1 or upper shell 22 of the gas bag module. In particular, the upper shell 22 may include multifunction buttons and/or infotainment buttons or horn push function buttons. These buttons may be distinguished from each other by different symbols which are printed onto the surface element 24.

Moreover, the surface element 24 may include touch sensitive areas, each touch sensitive area providing a different bottom function. For example, the outer lateral areas of the upper shell 22 in Fig. 4 which show a horn symbol may form a horn push button. Further, the cover 1 may include infotainment buttons, such as for volume or track control of a car infotainment system. These functions may also be assigned to different touch sensitive areas of the surface element 24. The touch sensitive areas may include capacitive elements or may be formed by capacitive areas. Thus, an electrically conducting layer may be included into the cover 1, in particular the upper shell 22. The electrically conductive layer may be arranged between the surface element 24 and the mounting element 15, in particular directly connected to the rear face 13 of the surface element 24.

It is clearly derivable from the embodiment shown in Fig. 4 that due to the opening 25 which allows for a access to the interior of the gas bag module, in particular the housing 20 which encloses the compressed gas bag, the cover can be designed free of tearlines. When the gas bag arranged in the housing 21 is inflated, the cap 26 removes from the opening 25. Thus, the opening 25 is uncovered and the gas bag is free to expand in front of the cover 1. However, the tether provided between the cap 26 and the cover 1 or, respectively, the upper shell 22 holds the cap 26 connected to the cover, thus avoiding that the cap 26 injures the vehicle occupant.

With the combination shown in Fig. 4 wherein the cap 26 and the cover 1 or upper shell 22 both are formed by over-molding a decorative element 11 or a surface element 24, the scope of design for a gas bag cover 1 is considerably enhanced. In particular, the whole front face of the cover 1 can be designed by a printed plastic film which is additionally over-molded (on its rear face) in order to enhance the strength of the cover 1.

## Claims

1. Cover (1) for a gas bag module (2) comprising:
- a decorative element (11) or surface element (24) having a front face (12) and a rear face (13), said front face (12) being visible when the cover (1) is connected to the gas bag module (2); and
- a mounting element (15) arranged on the rear face (13) of the decorative element (11) or surface element (24), said mounting element (15) being adapted for mounting the cover (1) to a housing (21) of the gas bag module (2); wherein
said mounting element (15) is formed by over-molding the decorative element (11) or surface element (24) such that the mounting element (15) is bonded directly to the decorative element (11) or surface element (24), in particular by material engagement,
**characterized in that**
the cover (1) is free of tearlines.

2. Cover (1) according to claim 1, wherein the decorative element (11) or surface element (24) and the mounting element (15) comprise same or different materials.

3. Cover (1) according to claims 1 or 2, wherein the decorative element (11) or surface element (24) is formed of a plastic film.

4. Cover (1) according to claim 3, wherein the plastic film comprises a decorated, in particular printed, surface, said decorated surface being arranged on the front face (12) or the rear face (13) of the decorative element (11) or surface element (24).

5. Cover (1) according to any of the preceding claims, wherein the decorative element (11) or surface element (24), in particular the plastic film, comprises a three-dimensional structure and the mounting element (15) fills cavities of said three-dimensional structure on the rear face (13) of the decorative element (11) or surface element (24).

6. Cover (1) according to any of the preceding claims, further comprising an opening (25) for receiving a cap (26) which allows for an inflating gas bag to escape from the gas bag module (2).

7. Cover (1) according to any of the preceding claims, wherein the surface element (24) includes at least one capacitive area which forms a touch-sensitive button.

8. Cover (1) according to any of the preceding claims, wherein the surface element (24), in particular the touch-sensitive button, includes at least one horn and/or infotainment and/or multifunction push button.

9. Gas bag module (2), in particular driver-side airbag module or passenger-side airbag module, including a cover (1) according to any of the preceding claims.

10. Steering wheel for a motor vehicle including a cover (1) or a gas bag module (2) according to any of the preceding claims.

11. Method of manufacturing a cover (1) according to any of claims 1 to 9, wherein a decorative element (11) or surface element (24) is provided and subsequently over-molded to create a mounting element (15) directly bonded to the decorative element (11) or surface element (24), in particular by material engagement, wherein fastening means (17) for mounting the mounting element (15) to a housing (21) of the gas bag module (2) are formed during the step of over-molding the decorative element (11) or surface element (24).

12. Method according to claim 11, wherein the decorative element (11) or surface element (24) is formed of a plastic film and wherein the step of providing a decorative element (11) or surface element (24) comprises printing a decor on the plastic film and/or preforming the plastic film into a three-dimensional shape.

13. Method according to claim 11 or 12, wherein the step of providing a decorative element (11) or surface element (24) comprises following steps:
- inserting the decorative element (11) or surface element (24), in particular the plastic film, in a mold such that the front face (12) of the decorative element (11) or surface element (24) contacts an inner surface of the mold entirely and the rear face (13) of the decorative element (11) or surface element (24) is spaced apart from the inner surface of the mold so as to provide an injection space between the rear face (13) of the decorative element (11) or surface element (24) and the inner surface of the mold and
- injecting a plastic material into the injection space to create the mounting element (15).

## Patentansprüche

1. Abdeckung (1) für ein Gassackmodul (2) mit:
- einem Zierelement (11) oder Oberflächenelement (24) mit einer Vorderseite (12) und einer Rückseite (13), wobei die Vorderseite (12) sichtbar ist, wenn die Abdeckung (1) mit dem Gassackmodul (2) verbunden ist; und
- einem Befestigungselement (15), das auf der Rückseite (13) des Zierelements (11) oder Oberflächenelements (24) angeordnet ist, wobei das Befestigungselement (15) zum Anbringen der Abdeckung (1) an einem Gehäuse (21) des Gassackmoduls (2) geeignet ist; wobei
das Befestigungselement (15) durch Überspritzen des Zierelements (11) oder Oberflächenelements (24) derart gebildet ist, dass das Befestigungselement (15) direkt mit dem Zierelement (11) oder Oberflächenelement (24), insbesondere durch Materialeingriff, verbunden ist,
**dadurch gekennzeichnet, dass**
die Abdeckung (1) frei von Reißlinien ist.

2. Abdeckung (1) gemäß Anspruch 1, wobei das Zierelement (11) oder Oberflächenelement (24) und das Befestigungselement (15) dieselben oder unterschiedliche Materialien aufweisen.

3. Abdeckung (1) gemäß Anspruch 1 oder 2, wobei das Zierelement (11) oder Oberflächenelement (24) aus einer Kunststofffolie besteht.

4. Abdeckung (1) gemäß Anspruch 3, wobei die Kunststofffolie eine verzierte, insbesondere bedruckte Oberfläche umfasst, wobei die verzierte Oberfläche an der Vorderseite (12) oder der Rückseite (13) des Zierelements (11) oder Oberflächenelements (24) angeordnet ist.

5. Abdeckung (1) gemäß einem der vorhergehenden Ansprüche, wobei das Zierelement (11) oder Oberflächenelement (24), insbesondere die Kunststofffolie, einen dreidimensionalen Aufbau umfasst und das Befestigungselement (15) Hohlräume des dreidimensionalen Aufbaus auf der Rückseite (13) des Zierelements (11) oder Oberflächenelements (24) ausfüllt.

6. Abdeckung (1) gemäß einem der vorhergehenden Ansprüche, weiterhin mit einer Öffnung (25) zum Aufnehmen einer Kappe (26), die es ermöglicht, dass ein sich aufblasender Gassack aus dem Gassackmodul (24) austritt.

7. Abdeckung (1) gemäß einem der vorhergehenden Ansprüche, wobei das Oberflächenelement (24) mindestens einen kapazitiven Bereich aufweist, der eine berührungsempfindliche Taste bildet.

8. Abdeckung (1) gemäß einem der vorhergehenden Ansprüche, wobei das Oberflächenelement (24), insbesondere die berührungsempfindliche Taste, mindestens eine Hupen- und/oder Infotainment- und/oder Multifunktions-Drucktaste aufweist.

9. Gassackmodul (2), insbesondere fahrerseitiges Airbagmodul oder beifahrerseitiges Airbagmodul, mit einer Abdeckung (1) gemäß einem der vorhergehenden Ansprüche.

10. Lenkrad für ein Kraftfahrzeug mit einer Abdeckung (1) oder einem Gassackmodul (2) gemäß einem der vorhergehenden Ansprüche.

11. Verfahren zur Herstellung einer Abdeckung (1) gemäß einem der Ansprüche 1 bis 9, wobei ein Zierelement (11) oder Oberflächenelement (24) bereitgestellt und anschließend überspritzt wird, um ein Befestigungselement (15) herzustellen, das direkt mit dem Zierelement (11) oder Oberflächenelement (24), insbesondere durch Materialeingriff, verbunden ist, wobei während des Schrittes des Überspritzens des Zierelements (11) oder Oberflächenelements (24) Befestigungseinrichtungen (17) zum Anbringen des Befestigungselements (15) an einem Gehäuse (21) des Gassackmoduls (2) gebildet werden.

12. Verfahren gemäß Anspruch 11, wobei das Zierelement (11) oder Oberflächenelement (24) aus einer Kunststofffolie besteht und wobei der Schritt des Bereitstellens eines Zierelements (11) oder Oberflächenelements (24) das Drucken eines Dekors auf die Kunststofffolie und/oder das Vorformen der Kunststofffolie in eine dreidimensionale Form umfasst.

13. Verfahren gemäß Anspruch 11 oder 12, wobei der Schritt des Bereitstellens eines Zierelements (11) oder Oberflächenelements (24) die folgenden Schritte umfasst:
- Einsetzen des Zierelements (11) oder Oberflächenelements (24), insbesondere des Kunststofffilms, in eine Form derart, dass die Vorderseite (12) des Zierelements (11) oder Oberflächenelements (24) vollständig an einer Innenfläche der Form anliegt und die Rückseite (13) des Zierelements (11) oder Oberflächenelements (24) von der Innenfläche der Form beabstandet ist, um einen Einspritzspalt zwischen der Rückseite (13) des Zierelements (11) oder Oberflächenelements (24) und der Innenfläche der Form bereitzustellen, und
- Einspritzen eines Kunststoffmaterials in den Einspritzspalt, um das Befestigungselement (15) herzustellen.

## Revendications

1. Couvercle (1) pour un module airbag (2), comprenant:
- Un élément décoratif (11) ou un élément de surface (24) ayant une face avant (12) et une face arrière (13), ladite face avant (12) étant visible lorsque le couvercle (1) est relié au module airbag (2); et
- Un élément de montage (15) disposé sur la face arrière (13) de l'élément décoratif (11) ou de l'élément de surface (24), ledit élément de montage (15) étant adapté pour le montage du couvercle (1) sur un boîtier (21) du module airbag (2); dans lesquels
ledit élément de montage (15) est formé par surmoulage de l'élément décoratif (11) ou de l'élément de surface (24) de telle sorte que l'élément de montage (15) est lié directement à l'élément décoratif (11) ou à l'élément de surface (24), en particulier par liaison matières, **caractérisé en ce que** le couvercle (1) est libre de lignes de découpe.

2. Couvercle (1) selon la revendication 1, dans lequel l'élément décoratif (11) ou l'élément de surface (24) et l'élément de montage (15) comprennent des matériaux identiques ou différents.

3. Couvercle (1) selon les revendications 1 ou 2, dans lequel l'élément décoratif (11) ou l'élément de surface (24) est formé d'un film de matière plastique.

4. Couvercle (1) selon la revendication 3, dans lequel le film de matière plastique comprend une surface décorée, en particulier imprimée, ladite surface décorée étant disposée sur la face avant (12) ou la face arrière (13) de l'élément décoratif (11) ou de l'élément de surface (24).

5. Couvercle (1) selon l'une quelconque des revendications précédentes, dans lequel l'élément décoratif (11) ou l'élément de surface (24), en particulier le film de matière plastique, comprend une structure en trois dimensions et où l'élément de montage (15) remplit les cavités de ladite structure en trois dimensions sur la face arrière (13) de l'élément décoratif (11) ou de l'élément de surface (21).

6. Couvercle (1) selon l'une quelconque des revendications précédentes, comprenant en outre une ouverture (25) recevant un bouchon (26) qui permet à un coussin gonflage de sortir du module airbag (2).

7. Couvercle (1) selon l'une quelconque des revendications précédentes, dans lequel l'élément de surface (24) comprend au moins une zone capacitive qui forme une zone de boutons tactiles.

8. Couvercle (1) selon l'une quelconque des revendications précédentes, dans lequel l'élément de surface (24), en particulier la zone de boutons tactiles, comprend au moins un avertisseur sonore et/ou l'info-divertissement et/ou un bouton-poussoir multifonction.

9. Module airbag (2), en particulier un module airbag conducteur ou un module airbag passager, comprenant un couvercle (1) selon l'une quelconque des revendications précédentes.

10. Volant de direction pour un véhicule automobile comprenant un couvercle (1) ou un module airbag (2) selon l'une quelconque des revendications précédentes.

11. Procédé de fabrication d'un couvercle (1) selon l'une quelconque des revendications 1 à 9, dans lequel un élément décoratif (11) ou l'élément de surface (24) est prévu et est ensuite surmoulé pour créer un élément de montage (15) directement lié à l'élément décoratif (11) ou à l'élément de surface (24), en particulier par liaison matières, dans lequel des moyens de fixation (17) pour monter l'élément de montage (15) sur un boîtier (21) du module airbag (2) sont formés au cours de l'étape de surmoulage de l'élément décoratif (11) ou de l'élément de surface (24).

12. Procédé selon la revendication 11, dans lequel l'élément décoratif (11) ou l'élément de surface (24) est formé d'un film de matière plastique et dans lequel l'étape de mise en place d'un élément décoratif (11) ou un élément de surface (24) comprend l'impression d'un décor sur le film de matière plastique et/ou le préformage du film de matière plastique en une forme tridimensionnelle.

13. Procédé selon les revendications 11 ou 12, dans lequel l'étape de mise en place d'un élément décoratif (11) ou un élément de surface (24) comprend les étapes suivantes:
- insertion de l'élément décoratif (11) ou de l'élément de surface (24), en particulier le film de matière plastique, dans un moule de telle sorte que la face avant (12) de l'élément décoratif (11) ou l'élément de surface (24) est entièrement en contact avec une surface intérieure du moule et la face arrière (13) de l'élément décoratif (11) ou l'élément de surface (24) est espacée de la surface intérieure du moule de manière à fournir un espace d'injection entre la face arrière (13) de l'élément décoratif (11) ou élément de surface (24) et la surface intérieure du moule et
- injection d'une matière plastique dans l'espace d'injection pour créer l'élément de montage (15).
